# EUROPÄISCHE PATENTANMELDUNG

(11) **EP 1 199 781 A2**
(43) Veröffentlichungstag der Anmeldung: **24.04.2002**
(21) Anmeldenummer: 01112445.0
(22) Anmeldetag: 22.05.2001
(51) Int. Cl.: H02G 15/08

(54) **Isolierter Schraubverbinder für Energiekabel**

(30) Priorität: 26.05.2000 DE 10026091
(71) Anmelder: CELLPACK AG, CH-5610 Wohlen (CH)
(72) Erfinder: Pilling, Jürgen., D-02794 Spitzkunnersdorf (DE); Schoenemann, Thomas., CH-5426 Lengnau (CH); Hardt, Falk., D-95213 Münchberg (DE); Wenske, Günter., D-01465 Liegau-Agustusbad (DE)
(74) Vertreter: Heyner, Klaus, Dr.-Ing.

(57) **Zusammenfassung**

Nach der Konzeption der Erfindung wird ein metallischer Schraubverbinder (1) und ein zugehöriger, den Schraubverbinder umhüllender wasserdichter Isolierkörper (2) bereits vom Hersteller zu einem kompakten Montageteil zusammengefasst.
Dieses Montageteil wird vom Hersteller vorzugsweise als stückgeprüfte Einheit "Schraubverbinder - Innenmuffe" produziert und in dieser kompakten Form an die Kunden ausgeliefert.

Der Aufbau des beschriebenen kompakten Montageteils, also des nunmehr isolierten Schraubverbinders, erfolgt in der Weise, dass der übliche metallische Schraubverbinder, z.B. im Spritzgießverfahren, mit einer fest haftenden Isolierschicht umhüllt wird. Alternativ kann der Verbinder mit Ausnahme einer stromtragfähigen Kontaktschiene aus Kunststoff aufgebaut werden. In jedem Fall benötigt die "Schraubverbinder - Innenmuffe" elastische Tüllen (3) an beiden Seiten des Verbinders (1) zur wasserdichten Einführung der Kabeladern, sowie Öffnungen (4) zum Einführen der Klemmschrauben (1.2), vorzugsweise Abreißschrauben, die mit Stöpseln (5), die vorzugsweise mit abtrennbaren Stegen an die Isolierung angespritzt sind, nach Entfernen der Abreißköpfe verschlossen werden. Die Tülle (3) wird in ihrer Geometrie so gestaltet, dass sie unterschiedliche Leiterformen (ein-, mehrdrähtig, rund und sektorförmig) zuverlässig wasserdicht umschliesst.

## Beschreibung

Zur Herstellung einer Kabelverbindung von Energiekabeln für Nennspannungen bis 1 kV (Niederspannung) werden üblicherweise metallische hülsenförmige Verbinder eingesetzt. Die abisolierten Enden der zu verbindenden Leiter werden beidseitig in den Verbinder gesteckt. Die mechanisch feste und elektrisch leitende Verbindung erfolgt durch Verpressen mit einem speziellen Presswerkzeug (Pressverbinder) oder durch Verschrauben mittels seitlich in dem Verbinder angeordnete Schrauben (Schraubverbinder). Das für die zuverlässige Verbindung erforderliche Drehmoment wird dabei entweder mit einem Drehmomentenschlüssel oder durch den Abriss des Schraubenkopfes beim Erreichen des erforderlichen Wertes sichergestellt.

Die Schraubverbinder mit Abreißschraube gewinnen zunehmend an Akzeptanz bei den Anwendern, da sie im Gegensatz zum Pressverbinder zur Montage kein Spezialwerkzeug erfordern. Außerdem kann ein bestimmter Schraubverbinder für mehrere Leiterquerschnitte eingesetzt werden. Man kann auch innerhalb des Querschnittsbereiches Kabel mit unterschiedlichem Querschnitt miteinander verbinden, was bei der Erweiterung bestehender Anlagen oft erforderlich ist.

Zum Wiederaufbau der elektrischen Isolierung und des mechanischen Außenschutzes müssen die metallischen Verbinder und die angrenzenden Leiterabschnitte im abgemantelten Bereich mit geeigneten Isolierstoffen umhüllt werden.

Dies erfolgt z.B. mit Giessharz, vorzugsweise Epoxidharz oder Polyurethanharz. Dazu werden die einzelnen Leiter des Kabels distanziert und der so vorbereitete Spleiß mit einer entsprechend geformten Kunststoffschale umhüllt, in die die vorher gemischten Komponenten aus Harz und Härter gefüllt werden. Vorteilhaft ist bei diesem Verfahren, dass der so entstandene Gießharzkörper die Funktionen "elektrisch isolieren", " gegen Wasser dichten" und "mechanisch schützen" gewährleistet. Nachteilig ist das relativ hohe Montagefehlerrisiko durch ungenügende Vermischung der Harzkomponenten insbesondere in 2-Kammerbeuteln oder anderen Gebindeformen, der Gehalt an Isozyanat mit Gesundheitsgefährdung, und gelegentlich auftretende Undichtigkeiten an ungünstig gestalteten oder falsch montierten Gießharzschalen.

Als Vergußmasse kommen auch Stoffe auf Bitumenbasis und in jüngster Zeit auch Gele, z.B. Silikongel zum Einsatz. In diesen Fällen muß die Schale mechanisch stabil sein, um einen dauerhaften Außenschutz zu gewährleisten

In einem anderen Verfahren werden die einzelnen Verbinder mit innen kleberbeschichteten Warmschrumpfschläuchen umhüllt. Anschließend wird der Spleiß mit einem ebenfalls an der Innenseite kleberbeschichteten Warmschrumpfschlauch umhüllt, der in seinen beiden Randbereichen den noch unverletzten Kabelmantel überlappt. Diese Lösung ist kostengünstiger als die Gießharzvariante und enthält keine gesundheitsgefährdenden Stoffe. Es ist jedoch nachteilig, dass die inneren Warmschrumpfschläuche vor der Montage der Verbinder in eine Parkposition auf den dafür weiter abgemantelten Aderenden eines der beiden Kabel geschoben werden müssen. Auch der äußere Schutzschlauch muss in eine solche Parkposition gebracht werden. Lediglich bei Verwendung von Schrumpfmanschetten entfällt dieser Nachteil für die Montage des äußeren Schutzes.

Eine derartige Verwendung von isolierenden Schrumpfschläuchen oder radial schrumpfbaren Muffen ist u.a. aus DE 44 17 363 A1 und DE 195 13 618 A1 bekannt. Ein wesentlicher Nachteil ist jedoch die zum Schrumpfen erforderliche Wärmequelle, wozu überwiegend Gasflammen eingesetzt werden. Bei unsachgemäßer Anwendung können Beschädigungen an der Kabel- und/oder Muffenisolierung auftreten.

In DE 197 27 567 A1 wird eine Abzweigklemme für ein Abzweigkabel und Hausanschlussmuffe beschrieben, bei der metallische hülsenförmige Klemmstücke mit senkrecht zur Verbinder- und Kabellängsachse vorhandenen Schraubschächten und eindrehbaren Klemmschrauben zur Anwendung kommen. Dabei ist der eigentliche aus Klemmstück und Klemmschrauben bestehende Verbinder bereits herstellerseitig mit einem am Verbinder befestigten wasserdichten Isolierkörper umhüllt. An den beiden Stirnseiten des Isolierkörpers befinden sich elastische Dichtungen zur Ein- bzw. Durchführung der Kabel und Kabeladern. Die Zugänge zu den Klemmschrauben sind mit Stöpseln aus Isoliermaterial verschließbar.

Aus DE 198 20 869 A1 und DE 43 41 384 A1 sind Mittel zur Anpassung des Querschnitts von Isolierdurchführungen bzw. Tüllen an den Kabelquerschnitt bekannt, die darüber hinaus noch über die Länge des Verbinders hinausreichen.

Gegenstand von DE 76 08 649 U 1 ist eine Abdichtungseinrichtung für eine Anschlussverbindung, bei der Abdichtungsteil und Abdeckkappe aus dem gleichen Material bestehen und durch einen Steg zur Verlustsicherung der Abdeckkappe miteinander verbunden sind.

In DE 195 10 598 A1 wird eine Aufschiebehilfe für das Aufschieben von elastischen hülsenförmigen Bauteilen auf Kabeladern beschrieben, die aus einer ringförmigen Anordnung von zueinander beabstandeten zungenartigen Laschen besteht.

Aufgabe der Erfindung ist es, einen isolierenden Schraubverbinder zu entwickeln, bei dem der metallische Verbinder und die wasserdichte Verbinder-isolierung zumindest weitgehend eine Einheit darstellen.
Dabei muss erreicht werden, dass ein wesentlicher Anteil am Aufbau der Isolierung vom Montageort zum Hersteller verlagert wird, damit sie einer Werksendprüfung unterzogen werden kann. Damit werden Montagefehler reduziert und die Zuverlässigkeit der Bauelemente erhöht.

Eine erfindungsgemässe Lösung dieser Aufgabe ist im Patentanspruch 1 und 2 angegeben. Weiterbildungen der Erfindung sind in den Unteransprüchen gekennzeichnet.

Nach der Konzeption der Erfindung wird ein metallischer Schraubverbinder und ein zugehöriger, den Schraubverbinder umhüllender wasserdichter Isolierkörper mit integrierten, an den Stirnseiten angeordneten Tüllen zur Aufnahme der Kabel(ader)enden bereits vom Hersteller zu einem kompakten Montageteil zusammengefasst. Dieses Montageteil wird vom Hersteller vorzugsweise als stückgeprüfte Einheit "Schraubverbinder - Innenmuffe" produziert und in dieser kompakten Form an die Kunden ausgeliefert.

Der Aufbau des beschriebenen kompakten Montageteils, also des nunmehr isolierten Schraubverbinders, erfolgt in der Weise, dass der übliche metallische Schraubverbinder, z.B. im Spritzgießverfahren, mit einer fest haftenden Isolierschicht umhüllt wird. Alternativ kann der Verbinder mit Ausnahme einer stromtragfähigen Kontaktschiene aus Kunststoff aufgebaut werden. In jedem Fall benötigt die "Schraubverbinder - Innenmuffe" elastische Tüllen an beiden Seiten des Verbinders zur wasserdichten Einführung der Kabeladern, sowie Öffnungen zum Einführen der Klemmschrauben, vorzugsweise Abreißschrauben, die mit Stöpseln, die vorzugsweise mit abtrennbaren Stegen an die Isolierung angespritzt oder an ihr befestigt sind, nach Entfernen der Abreißköpfe verschlossen werden. Die Tülle wird in ihrer Geometrie so gestaltet, dass sie unterschiedliche Leiterformen (ein-, mehrdrähtig, rund und sektorförmig) zuverlässig wasserdicht umschliesst.
Mehrstufige Tüllen sind für Mehrbereichslösungen mit großen Querschnittsunterschieden einsetzbar.

Die Formgebung der Stöpsel, die zum Verschließen der Öffnungen bzw. Zugänge nach dem Eindrehen der Abreißschrauben bis in die Endstellung dienen, erfolgt in Wechselwirkung mit der Geometrie der Einführöffnung in der Weise, dass der Stöpsel zwar leicht eingeführt, jedoch praktisch nicht wieder entfernt werden kann. dieser Effekt kann durch Verkleben unterstützt werden. Dazu ist der Angusssteg mit einer Schwachstelle in der Nähe der Oberfläche des Stöpsels versehen, die vor dem Verschließen des Stöpsels aufgebrochen wird.

Beim Herstellen der elektrischen Verbindung mittels des neuen isolierten Schraubverbinders werden die Kabelenden nur soweit abisoliert, dass nach ihrer Einführung in die Schraubverbinder-Innenmuffe der in der Tülle liegende Teil noch mit der Aderisolierung versehen ist. Der Durchmesser der Tülle ist so gewählt, dass sie nach der Montage der Kabelader mit dem kleinsten Leiterquerschnitt des Anwendungsbereiches mindestens ca. 10% gedehnt ist und damit ein wasserdichter Übergang zur Aderisolierschicht gegeben ist. Bei mehrstufigen Tüllen ergeben sich die Abstufungen demgemäß.

Beim Einführen der abisolierten Kabelader kann die Tülle gestaucht werden, so dass das Einführen unmöglich oder erschwert wird. Mangelhaft entfernter Grat an der Schnittkante des Leiters kann dabei die Innenoberfläche der Tülle verletzen. Dies kann wirkungsvoll vermieden werden, wenn vor dem Einführen die Aufschiebehilfe nach DE 195 10 598 A1 in die Öffnung gesteckt und nach dem Einführen und Verschrauben der Ader wieder entfernt wird.

Weitere Einzelheiten, Merkmale und Vorteile der Erfindung ergeben sich aus der nachfolgenden Beschreibung eines Ausführungsbeispiels unter Bezugnahme auf die zugehörige Zeichnung. Es zeigen
- Fig. 1: metallisches Klemmstück eines herkömmlichen Verbinders,
- Fig. 2: eine erste Ausführungsvariante des neuen isolierten Schraubverbinders,
- Fig. 3: eine zweite Ausführungsvariante des neuen isolierten Schraubverbinders,
- Fig. 4: Aufschiebehilfe für die Montage der Kabeladern.

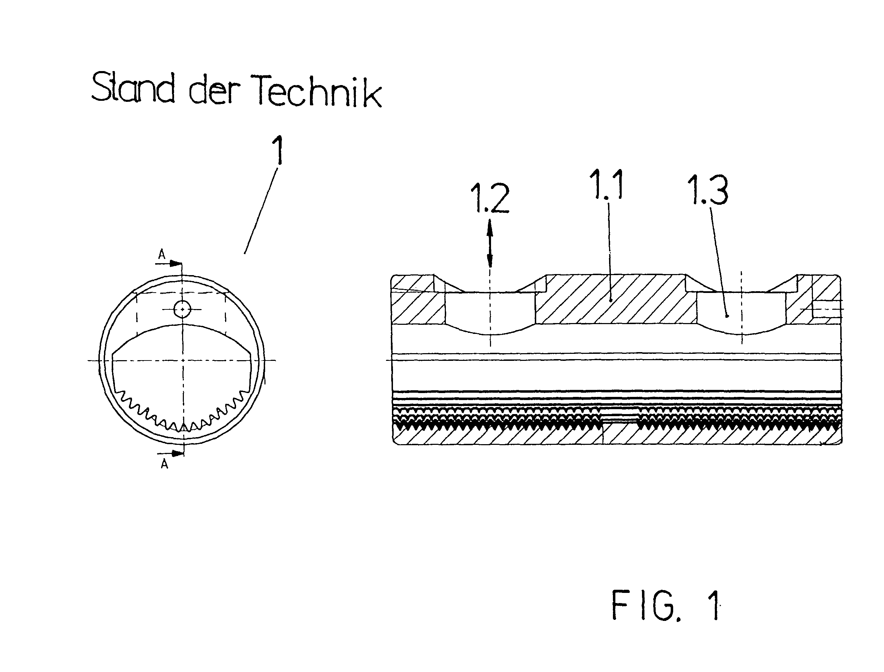

Fig. 1 zeigt das metallische Klemmstück 1.1 des hülsenförmigen Verbinders 1 ohne Isolation im Längsschnitt und im Querschnitt (linke Darstellung). Im unteren Teil der Hülsenwandung ist eine Riffelzahnung zur verbesserten Kontaktierung mit den aufliegenden Leiterenden eingearbeitet. Senkrecht zum Verbinder 1 bzw. Klemmstück 1.1 sind im oberen Teil des Verbinders, der zu dem Zweck eine dickere Wandung aufweist, zwei Schraubenschächte 1.3 mit Gewinde für die Klemmschrauben 1.2 zur Fixierung der Leiterenden eingebracht.

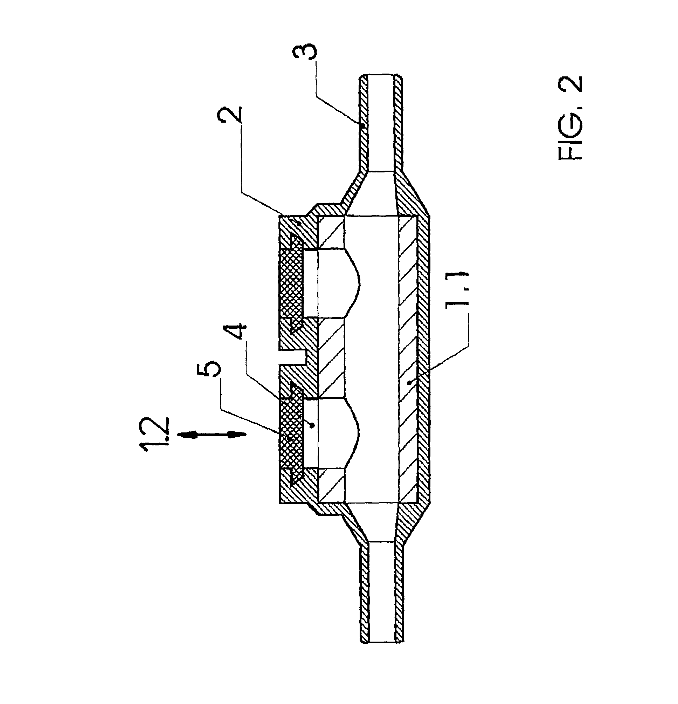

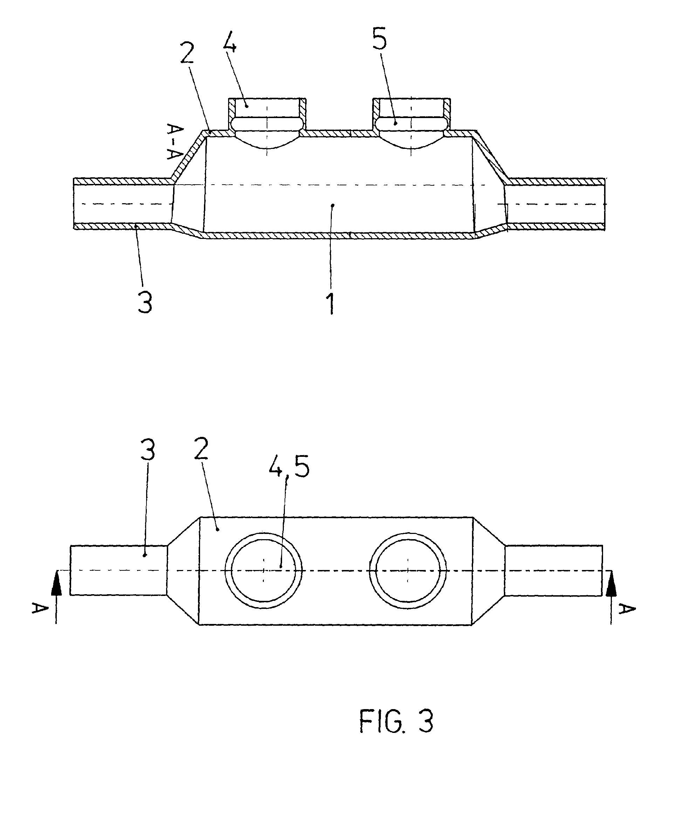

Gegenstand der Fig. 2 und 3 sind Ausführungsbeispiele von isolierten Schraubverbindern, bei denen die metallischen Verbinder 1 bereits herstellerseitig fest, beispielsweise im Spritzgießverfahren, mit dem zugehörigen Isolierkörper 2 zu einer untrennbaren Einheit verbunden sind.
Der das Klemmstück 1.1 des Verbinders 1 umhüllende Isoliermantel besitzt Öffnungen 4, durch die die Klemmschrauben 1.2 erreichbar und verstellbar sind. An den Stirnseiten des Klemmstückes 1.1 geht der Isoliermantel in die elastischen Tüllen 3 über, durch die die Leiter bis in das Klemmstück 1.1 eingeschoben werden, wobei durch straffes Aufliegen der aufgeweiteten Tülle auf der intakten Leiterisolation ein wasserdichter Abschluß zwischen Tülle 3 und Leiterisolation entsteht.

Zur Unterstützung des Dicht- und Gleitverhaltens der Tülle beim eingeschobenen Leiter bzw. beim Einschieben des Leiters können in die Innenwandung der Tülle konzentrische Rillen eingebracht werden, die ein Dicht- und ggf. Gleitmittel aufnehmen können. Diese Rillen sollen das Verschieben des Dicht- bzw. Gleitmittels beim Einschieben des Leiters in die Tülle ausreichend verhindern.

Die Öffnungen 4 im Mantel des Isolierkörpers 2 werden durch Stöpsel oder Deckel 5 aus Isoliermaterial verschlossen.
Die Arretierung der Stöpsel 5 in den Öffnungswandungen erfolgt in angepaßter Geometrie von Stöpsel 5 und Wandungskontur in der Öffnung 4.

Diese Stöpsel-Wandungskontur ist bei der Ausführungsform nach Fig. 2 sägezahnartig und in Fig. 3 noppenartig ausgeführt.

Ein üblicher Schraubverbinder nach Fig. 1 wird durch Plandrehen an den Stirnflächen des Klemmstückes 1.1 sowie durch ringförmige Auflageflächen an den Schraubenschächten 1.3 so gestaltet und bezüglich der Toleranzen begrenzt, dass er in ein Spritzgießwerkzeug eingelegt und mit einem Elastomer, vorzugsweise Ethylen-Propylen-Dien-Monomer in einer Spritzgießmaschine umspritzt werden kann, s. Fig. 2 und 3.
Die Stöpsel 5 können über Stege an die Isolierung 2 angespritzt sein. Die Stege enthalten eine Sollbruchstelle. Der Durchmesser des Stöpsels 5 ist ca. 10% größer als der Innendurchmesser der Öffnung 4.

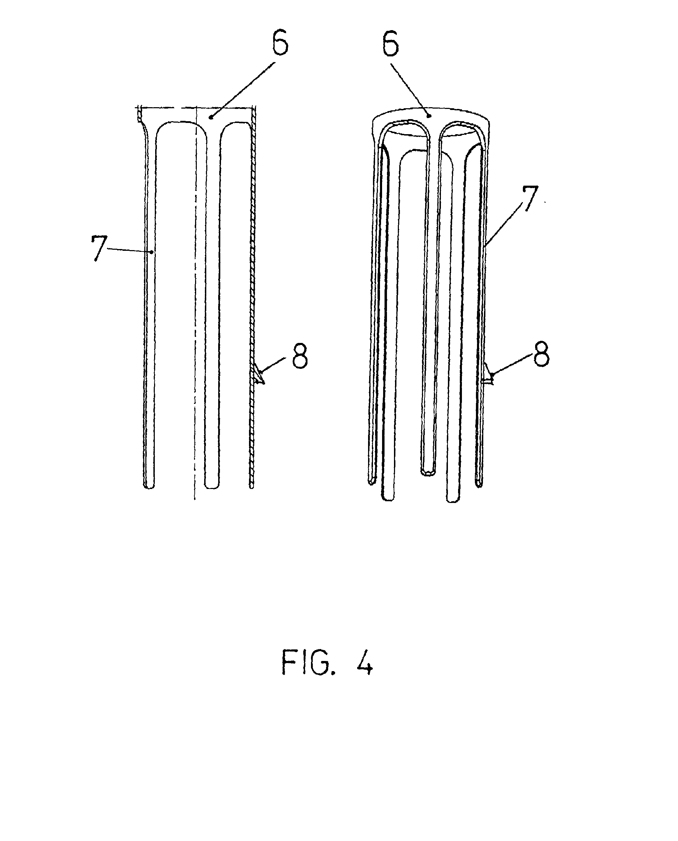

Bei der Montage wird zunächst die Aufschiebehilfe 6 (s. Fig. 4 mit der linken Abbildung als Schnittdarstellung), bestehend aus einer konzentrischen Anordnung von Gleitstegen 7, in die Tülle 3 maximal bis an den Rand des Klemmstückes 1.1 eingeführt. Um auszuschließen, dass die Gleitstege 7 unzulässig weit eingeschoben werden und damit das spätere Befestigen der Ader be- oder verhindern, sind an den Gleitstegen Anschlagnoppen 8 vorgesehen. Zu diesem Zweck können die Gleitstege auch in Richtung Bund trapezförmig verbreitert werden. um damit das Eindringen derselben in die Tülle zu begrenzen. Die abisolierte Ader wird nun im Tüllenbereich entlang der Gleitstege 7 der Aufschiebehilfe 6 eingeführt. Dann wird die zweite Aufschiebehilfe 6 zwischen Leiter und Tülle 3 geschoben. Das abisolierte Ende des zweiten Leiters wird ebenfalls durch die Tülle in den Verbinder eingeschoben.
Die Schrauben 1.2 werden jetzt soweit angezogen, dass die Kabeladern fixiert sind. Die Aufschiebehilfen 6 werden entfernt und für die Montage der weiteren Verbinder bereitgelegt. Die Abreißschrauben 1.2 werden bis zum Abreißen festgezogen. Die Abreißköpfe werden entfernt. Der Stöpsel 5 wird mit oder ohne Kleber befestigt.

Der Außenschutz erfolgt mit einer üblichen Hülle z.B. mit einer Hartgummischale, die nicht Gegenstand der Erfindung ist.

### LISTE DER BEZUGSZEICHEN

- 1: Verbinder
1.1 Klemmstück
1.2 Klemmschraube
1.3 Schraubenschacht
- 2: Isolierkörper
- 3: Tüllen (am Isolierkörper)
- 4: Öffnungen (im Isolierkörper)
- 5: Stöpsel
- 6: Aufschiebehilfe
- 7: Gleitstege
- 8: Anschlagnoppen

## Patentansprüche

1. Isolierter Schraubverbinder für Energiekabel bei Nennspannungen bis 1 kV (Niederspannung) unter Verwendung eines metallischen hülsenförmigen Klemmstückes (1.1) mit senkrecht zur Verbinder- und Kabellängsachse vorhandenen Schraubschächten (1.3) und eindrehbaren Klemmschrauben (1.2), wobei der eigentliche aus Klemmstück (1.1) und Klemmschrauben (1.2) bestehende Verbinder (1) bereits herstellerseitig mit einem am Verbinder (1) festhaftenden wasserdichten Isolierkörper (2) umhüllt ist, der
a) an beiden Stirnseiten des Verbinders (1) über seine Länge hinaus reichende elastische Tüllen (3) zur Einführung der Kabeladern aufweist, die das durchgeführte Kabeladerende straff und damit wasserdicht umschließen und
b) an den Zugängen zu den Klemmschrauben (1.2) Öffnungen (4) besitzt, die mit Stöpsel (5) aus Isoliermaterial verschließbar sind.

2. Isolierter Schraubverbinder für Energiekabel bei Nennspannungen bis 1 kV (Niederspannung) unter Verwendung eines hülsenförmigen Klemmstückes (1.1) mit senkrecht zur Verbinder- und Kabellängsachse vorhandenen Schraubschächten (1.3) und eindrehbaren Klemmschrauben (1.2), wobei das Klemmstück (1.1) mit Ausnahme einer metallischen stromtragfähigen Kontaktschiene aus Kunststoff besteht und
der eigentliche aus Klemmstück (1.1) und Klemmschrauben (1.2) bestehende Verbinder (1) bereits herstellerseitig mit einem am Verbinder (1) festhaftenden wasserdichten Isolierkörper (2) umhüllt ist, der
a) an beiden Stirnseiten des Verbinders (1) über seine Länge hinaus reichende elastische Tüllen (3) zur Einführung der Kabeladern aufweist, die das durchgeführte Kabeladerende straff und damit wasserdicht umschließen und
b) an den Zugängen zu den Klemmschrauben (1.2) Öffnungen (4) besitzt, die mit Stöpsel (5) aus Isoliermaterial verschließbar sind.

3. Schraubverbinder nach Anspruch 1 oder 2,
**dadurch gekennzeichnet, dass** der Querschnitt der Tülle (3) variabel ist und so gewählt wird, dass unterschiedliche Leiterformen wie eindrähtig, mehrdrähtig, rund und sektorförmig wasserdicht umschlossen sind.

4. Schraubverbinder nach Anspruch 3,
**dadurch gekennzeichnet, dass** der Durchmesser der Tülle (3) so gewählt ist, dass sie nach der Montage der Kabelader mit dem kleinsten Leiterquerschnitt des Anwendungsbereichs mindestens 10% gedehnt ist.

5. Schraubverbinder nach Anspruch 3 oder 4,
**dadurch gekennzeichnet, dass** die Tülle (3) mehrstufig gestaltet ist.

6. Schraubverbinder nach einem der Ansprüche 1 bis 5,
**dadurch gekennzeichnet, dass** in die Innenwandung der Tülle (3) konzentrische Rillen eingebracht sind, die ein Dicht- und ggf. Gleitmittel aufnehmen können.

7. Schraubverbinder nach einem der Ansprüche 1 bis 6,
**dadurch gekennzeichnet, dass** die Stöpsel (5) in Wechselwirkung mit der Kontur der Öffnungen (4) im Isolierkörper (2) eine solche Geometrie aufweisen, dass die Stöpsel (5) leicht in die Öffnungen (4) einsetzbar, aber nur schwer wieder entfernbar sind.

8. Schraubverbinder nach Anspruch 7,
**dadurch gekennzeichnet, dass** das Einsetzen und Fixieren der Stöpsel (5) in die Öffnungen (4) durch Einrasten und/oder Einkleben erfolgt.

9. Schraubverbinder nach Anspruch 7 oder 8,
**dadurch gekennzeichnet, dass** die Stöpsel (5) über Stege am Isolierkörper (2) befestigt sind, wobei die Stege am Übergang zu den Stöpseln Sollbruchstellen aufweisen.

10. Schraubverbinder nach einem der Ansprüche 1 bis 9,
**dadurch gekennzeichnet, dass** das Einschieben der Kabeladern in die Tüllen (3) des Verbinders mittels einer Aufschiebehilfe (6) erfolgt, die aus einer konzentrischen Anordnung von Lamellen (7) besteht, wobei die Lamellen Anschlagnoppen (8) aufweisen oder ihre Breite trapezförmig erweitert ist, um die Einschiebtiefe der Aufschiebehilfe (6) bis maximal zum Rand des Klemmstückes (1.1) begrenzen.
